# EUROPEAN PATENT APPLICATION

(11) **EP 4 667 991 A1**
(43) Date of publication of application: **24.12.2025**
(21) Application number: 24756979.1
(22) Date of filing: 15.02.2024
(51) Int. Cl.: G02B 6/44, G02B 6/02, G02B 6/04

(54) **FIBER ASSEMBLY**

(30) Priority: 17.02.2023 JP 2023023215
(71) Applicant: Fujikura Ltd., Tokyo 135-8512 (JP)
(72) Inventor: ODA, Takuya, Sakura-shi, Chiba 285-8550 (JP)
(74) Representative: Hoffmann Eitle
(86) International application number: PCT/JP2024/005382
(87) International publication number: WO 2024/172139

(57) **Abstract**

In a tape core wire T in which two or more multicore fibers 10a to 10d each including a plurality of cores 11a to 11d and a cladding 12 surrounding each of the cores 11a to 11d are bundled, an optical characteristic of a specific core 11a in a specific multicore fiber 10a is different from an optical characteristic of the core 11a corresponding to the specific core 11a of the multicore fiber 10a in another multicore fiber of the multicore fibers 10b to 10d.

## Description

### Technical Field

The present invention relates to a fiber assembly.

### Background Art

In order to achieve an increase in transmission capacity of an optical fiber communication device, it is known to transmit a plurality of signals by light propagating through each core using a multicore fiber in which an outer periphery of a plurality of cores as a waveguide is surrounded by one cladding. Patent Literature 1 below describes a tape core wire as a fiber assembly in which such multicore fibers are bundled.

[Patent Literature 1] JP 2017-173514 A

### Summary of Invention

In such a fiber assembly, there is a demand for identifying a specific multicore fiber when the fiber assembly is connected to an optical communication member such as another fiber assembly.

Therefore, an object of the present invention is to provide a fiber assembly in which a specific multicore fiber can be identified when connected to an optical communication member.

A first aspect of the present invention is a fiber assembly in which a fiber assembly in which two or more multicore fibers each including a plurality of cores and a cladding surrounding each of the cores are bundled, in which an optical characteristic of a specific core of the cores in a specific multicore fiber of the multicore fibers is different from an optical characteristic of the core corresponding to the specific core in another multicore fiber of the multicore fibers.

According to the first aspect, in the case of being connected to the optical communication member, the specific multicore fiber can be identified by examining the optical characteristics of the core. The optical characteristics can be measured on the basis of, for example, measurement results by an optical time domain reflectometer (OTDR), an optical frequency domain reflectometry (OFDR), an optical loss test set (OLTS), or the like.

A second aspect of the present invention is a fiber assembly in which a plurality of multicore fibers each including a plurality of cores and a cladding surrounding each of the cores are bundled, the fiber assembly including a plurality of fiber bundles in which two or more multicore fibers are bundled, in which an optical characteristic of a specific core of the cores in a specific multicore fiber of the multicore fibers of a specific fiber bundle of the fiber bundles is different from an optical characteristic of the core corresponding to the specific core in the multicore fiber corresponding to the specific multicore fiber in another fiber bundle of the fiber bundles.

According to the second aspect, similarly to the first aspect, in the case of being connected to the optical communication member, the specific multicore fiber can be identified by examining the optical characteristics, and as a result, a specific fiber bundle can be identified.

A third aspect of the present invention is the fiber assembly according to the first or second aspect, in which a number of the specific cores is plural, and the optical characteristic is a predetermined value obtained on the basis of a loss of light of a specific wavelength of the plurality of cores.

In the third aspect, since the predetermined value is a value caused by a plurality of cores in the multicore fiber, a specific multicore fiber can be identified with high accuracy as compared with a case where the predetermined value is a value caused by one core in the multicore fiber.

A fourth aspect of the present invention is the fiber assembly of the third aspect in which the specific core is all the cores of the specific multicore fiber.

In the fourth aspect, since the predetermined value is a value caused by all the cores in the multicore fiber, a specific multicore fiber can be identified with high accuracy as compared with a case where the predetermined value is a value caused by one core in the multicore fiber.

In a fifth aspect is the fiber assembly of the third or fourth aspect in which the specific wavelength is a wavelength other than a communication wavelength band.

In optical communication, it is preferable that a variation in loss of light propagating through each core is small. According to the fifth aspect, by using light of a specific wavelength other than the communication wavelength band in order to examine a specific multicore fiber, it is possible to identify the specific multicore fiber even when there is little variation in propagation of light of a wavelength of the communication wavelength band in the core.

A sixth aspect is the fiber assembly according to the fifth aspect, in which the specific wavelength is shorter than the communication wavelength band.

As the wavelength of light propagating through the core is shorter, inter-core crosstalk of the light tends to be suppressed. Thus, according to the sixth aspect, as compared with a case where the communication wavelength band is the same and the specific wavelength is longer than the communication wavelength band, it is possible to suppress the inter-core crosstalk of the light of the specific wavelength propagating through the core when a characteristic value is examined using the light of the specific wavelength other than the communication wavelength band. Therefore, according to the eighth aspect, a specific multicore fiber can be more easily identified.

A seventh aspect is the fiber assembly according to any one of the third to sixth aspects, in which the specific wavelength is 1360 nm or more and 1460 nm or less.

In a case where the wavelength of light propagating through the core is 1360 nm or more and less than 1460 nm, which is a so-called E-band, it is known that the loss of light due to the hydroxyl group contained in the core increases, and it may be referred to as OH loss. According to the seventh aspect, by making the content of the hydroxyl group different between the specific core in the specific multicore fiber and the core corresponding to the specific core in the another multicore fiber, the propagation loss of the specific core and the propagation loss of the core corresponding to the specific core can be made different. In addition, the wavelength of light used in optical communication may be 1360 nm or more and less than 1460 nm, and there are existing OTDR, OFDR, OLTS, and the like using light in the wavelength band. Thus, according to the ninth aspect, for example, the propagation loss can be measured even in the existing OTDR, OFDR, OLTS, and the like. Therefore, a specific multicore fiber can be easily identified.

An eighth aspect is the fiber assembly according to any one of the third to sixth aspects, in which the specific wavelength is 800 nm or more and 950 nm or less.

The wavelength of light used in multi-mode fiber communication may be 800 nm or more and 950 nm or less, and there are existing OTDR, OLTS, and the like using light in the wavelength band. Thus, according to the eighth aspect, for example, the propagation loss can be measured even in an existing OTDR, OLTS, or the like. Therefore, a specific multicore fiber can be easily identified.

A ninth aspect is the fiber assembly according to the first aspect, in which the specific multicore fiber is formed by connecting end portions of a plurality of optical fiber portions to each other, and a loss of light at a connection portion between the optical fiber portions in the specific multicore fiber is different from a loss of light at a position corresponding to the connection portion of the specific multicore fiber in the another multicore fiber.

Here, in the case of a short multicore fiber, since the propagation loss is small, the measured error of the propagation loss may be large. However, according to the ninth aspect, since the loss of light due to the connection portion is used, even if the multicore fiber is short, an error can be suppressed to identify a specific multicore fiber.

A tenth aspect is the fiber assembly according to the second aspect, in which the specific multicore fiber is formed by connecting end portions of a plurality of optical fiber portions to each other, and a loss of light at a connection portion between the optical fiber portions in the specific multicore fiber is different from a loss of light at a position corresponding to the connection portion of the specific multicore fiber in the multicore fiber corresponding to the specific multicore fiber.

According to the tenth aspect, similarly to the ninth aspect, since the loss of light due to the connection portion is used, even if the multicore fiber is short, an error can be suppressed to identify the specific multicore fiber.

An eleventh aspect is the fiber assembly according to the first aspect, in which the specific multicore fiber and the another multicore fiber are formed by connecting end portions of a plurality of optical fiber portions to each other, and a number of connection portions between the optical fiber portions in the specific multicore fiber is different from a number of connection portions between the optical fiber portions in the another multicore fiber.

According to the eleventh aspect, the specific multicore fiber is identified on the basis of a discrete natural number that is the number of connections, but a loss such as a propagation loss generally does not become a natural number. Therefore, it is possible to easily identify the specific multicore fiber as compared with a case where the specific multicore fiber is identified on the basis of a difference in loss such as a propagation loss.

A twelfth aspect is the fiber assembly according to the second aspect, in which the specific multicore fiber and the multicore fiber corresponding to the specific multicore fiber are formed by connecting end portions of a plurality of optical fiber portions to each other, and a number of connection portions between the optical fiber portions in the specific multicore fiber is different from a number of connection portions between the optical fiber portions in the multicore fiber corresponding to the specific multicore fiber.

According to the twelfth aspect, similarly to the eleventh aspect, it is possible to easily identify the specific multicore fiber as compared with the case of identifying the specific multicore fiber on the basis of a difference in loss such as a propagation loss.

A thirteenth aspect is the fiber assembly of the first aspect in which a difference between a propagation loss of light of a specific wavelength in the specific core of the specific multicore fiber and a propagation loss of light of the specific wavelength in the core corresponding to the specific core in the another multicore fiber is 0.1 dB/km or more.

A fourteenth aspect is the fiber assembly according to the second aspect in which a difference between a propagation loss of light of a specific wavelength in the specific core of the specific multicore fiber and a propagation loss of light of the specific wavelength in the core corresponding to the specific core in the multicore fiber corresponding to the specific multicore fiber is 0.1 dB/km or more.

According to the thirteenth and fourteenth aspects, a difference in propagation loss can be measured even in a measurement device (for example, a general-purpose measuring device) in which a measurable minimum value of the propagation loss is large, so that the specific multicore fiber can be easily identified.

A fifteenth aspect is the fiber assembly according to any one of the first, second, thirteenth, and fourteenth aspects, in which the optical characteristic is a propagation loss of a specific wavelength of the core, and the specific wavelength is 360 nm or more and 830 nm or less.

Light having a wavelength of 360 nm or more and less than 830 nm is visible light, and the light appears dark as the energy decreases. Therefore, according to the fifteenth aspect, for example, the specific multicore fiber can be identified by visually checking the brightness of return light when the light of the specific wavelength described above is caused to enter the core from one end side of each multicore fiber.

As described above, according to the present invention, a fiber assembly in which a specific multicore fiber can be identified when connected to an optical communication member is provided.

### Brief Description of Drawings

[FIG. 1] FIG. 1 is a conceptual diagram illustrating an optical communication apparatus including a fiber assembly according to a first embodiment of the present invention.
[FIG. 2] FIG. 2 is a perspective view schematically illustrating tape core wires.
[FIG. 3] FIG. 3 is a view illustrating a cross section perpendicular to a longitudinal direction of the tape core wires.
[FIG. 4] FIG. 4 is a view illustrating a cross section perpendicular to a longitudinal direction of a single-core fiber.
[FIG. 5] FIG. 5 is a diagram illustrating optical characteristics of the optical communication apparatus according to the first embodiment.
[FIG. 6] FIG. 6 is a conceptual diagram illustrating an optical communication apparatus according to a second embodiment.
[FIG. 7] FIG. 7 is a view schematically illustrating a cross section perpendicular to a longitudinal direction of a bundle unit in a third embodiment.
[FIG. 8] FIG. 8 is a view schematically illustrating a cross section perpendicular to a longitudinal direction of a cable in a fourth embodiment.

### Description of Embodiments

Hereinafter, preferred embodiments of a fiber assembly according to the present invention will be described in detail with reference to the drawings. The embodiments exemplified below are intended to facilitate understanding of the present invention and are not intended to limit the present invention. The present invention can be modified and improved from the embodiments within scope of the claims. Note that, for easy understanding, scales in the respective drawings may be different from scales described in the following description.

### (First Embodiment)

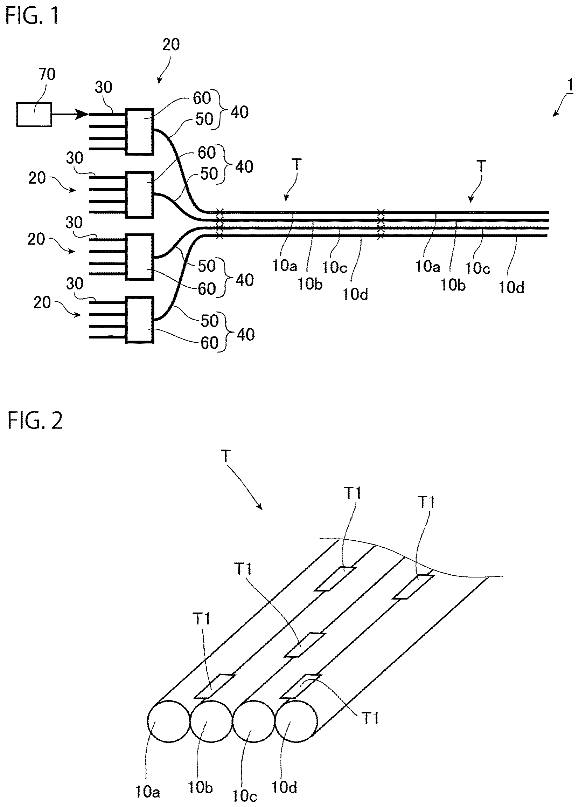

FIG. 1 is a conceptual diagram illustrating an optical communication apparatus including a fiber assembly according to the present embodiment. The fiber assembly of the present embodiment is a tape core wire T, and an optical communication apparatus 1 includes two tape core wires T and a plurality of fan-in/fan-out devices 20 as main components.

In the present embodiment, configurations of the tape core wires T are the same as each other. Thus, in the following description, one of the tape core wires T will be described, and the other tape core wire T are denoted by the same reference numerals and redundant description is omitted unless otherwise specified.

FIG. 2 is a perspective view schematically illustrating the tape core wires T. The tape core wire T of the present embodiment is a so-called intermittent bonding type tape core wire. In the present embodiment, the tape core wire T has a configuration in which two or more multicore fibers 10a to 10d are arranged along a direction perpendicular to the longitudinal direction, and adjacent multicore fibers 10a to 10d are connected to each other by a connecting member T1 provided intermittently and bundled. Examples of the material constituting the connecting member T1 include resins such as ultraviolet curable resins. The tape core wires T can be easily deformed, and can be rolled into, for example, a substantially quadrangular prism shape. FIG. 2 illustrates an example in which the tape core wires T includes four multicore fibers 10a to 10d, but the number of multicore fibers constituting the tape core wires T only needs to be two or more.

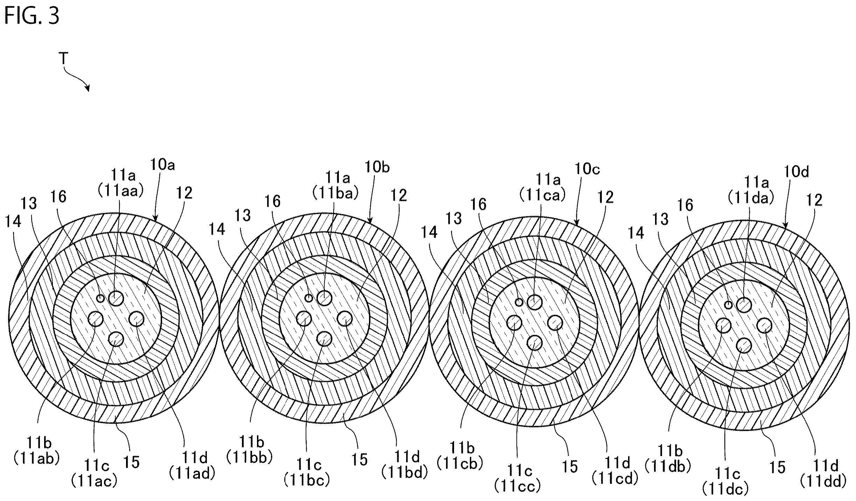

FIG. 3 is a view illustrating a cross section perpendicular to the longitudinal direction of the tape core wire T. Note that FIG. 3 is a cross-sectional view of the tape core wire T at a position not intersecting the connecting member T1. As illustrated in FIG. 3, in the present embodiment, configurations of the multicore fibers 10a to 10d are substantially the same. Thus, hereinafter, the multicore fiber 10a will be described, and the other multicore fibers 10b to 10d are denoted by the same reference numerals and redundant description is omitted unless otherwise specified.

The multicore fiber 10a according to the present embodiment includes, as main components, a plurality of cores 11a to 11d, a cladding 12 surrounding outer peripheral surfaces of the cores 11a to 11d with no gap, a primary coating layer 13 covering the cladding 12, a secondary coating layer 14 covering the primary coating layer 13, a colored layer 15 covering the secondary coating layer 14, and a marker 16. Note that, although FIG. 3 illustrates an example in which four cores 11a to 11d are provided, the number of cores only needs to be plural and is not limited.

In the present embodiment, the outer shape in the cross section perpendicular to the longitudinal direction of the cladding 12 is substantially circular, and the cores 11a to 11d are disposed at positions that are substantially four times rotationally symmetric about the center of the cladding 12. Note that the arrangement of the cores is not limited.

The refractive index of each of the cores 11a to 11d is higher than the refractive index of the cladding 12, and in the present embodiment, relative refractive index differences of the cores 11a to 11d with respect to the cladding 12 are the same. Such cores 11a to 11d are made of, for example, silica glass to which a dopant such as germanium having a high refractive index is added, and the cladding 12 is made of, for example, silica glass to which no dopant is added. In addition, the cores 11a to 11d may be made of silica glass to which no dopant is added, and the cladding 12 may be made of silica glass to which a dopant such as fluorine having a low refractive index is added.

In the present embodiment, the content of the hydroxyl group of the core 11a is larger than the content of the hydroxyl groups of the cores 11b to 11d. As a method of making the number of hydroxyl groups of the core 11a larger than the number of hydroxyl groups of the cores 11b to 11d, for example, in the process of manufacturing the base material of the multicore fiber 10a, the time of a dehydration step of a core rod to be the core 11a is made shorter than the time of a dehydration step of core rods to be 11b to 11d. Note that the contents of the hydroxyl groups of the cores 11a to 11d in the multicore fibers 10b to 10d are substantially the same as each other, and are substantially the same as the contents of the hydroxyl groups of the cores 11b to 11d in the multicore fiber 10a.

The marker 16 is disposed in the cladding 12. The refractive index of the marker 16 is different from the refractive index of the cladding 12, and may be higher or lower than the refractive index of the cladding 12. In the present embodiment, the distance between the core 11a and the marker 16 is smaller than the distances between the other cores 11b to 11d and the marker 16, and the cores 11a to 11d can be identified by the marker 16. The core 11a of the multicore fiber 10a corresponds to the core 11a of the multicore fibers 10b to 10d, the core 11b of the multicore fiber 10a corresponds to the core 11b of the multicore fibers 10b to 10d, the core 11c of the multicore fiber 10a corresponds to the core 11c of the multicore fibers 10b to 10d, and the core 11d of the multicore fiber 10a corresponds to the core 11d of the multicore fibers 10b to 10d.

The primary coating layer 13 and the secondary coating layer 14 are made of a resin such as an ultraviolet curable resin.

The colored layer 15 is a layer forming the outermost layer of the multicore fiber 10a, and is made of a resin such as an ultraviolet curable resin. In the present embodiment, the colors of the colored layers 15 in the multicore fibers 10a to 10d are different from each other.

One end of each of the multicore fibers 10a to 10d of one tape core wire T having such a configuration is connected to the other end of each of the multicore fibers 10a to 10d of the other tape core wire T. At this time, the multicore fibers 10a to 10d having the same color of the colored layer 15 are connected to each other. The cores 11a to 11d of the multicore fibers 10a to 10d of one tape core wire T are optically connected to the cores 11a to 11d of the multicore fibers 10a to 10d of the other tape core wire T whose positions with respect to the marker 16 are the same as the positions of the cores 11a to 11d. Note that, in the following description, for easy understanding, the cores 11a to 11d of the multicore fiber 10a may be referred to as cores 11aa to 11ad, the cores 11a to 11d of the multicore fiber 10b may be referred to as cores 11ba to 11bd, the cores 11a to 11d of the multicore fiber 10c may be referred to as cores 11ca to 11cd, and the cores 11a to 11d of the multicore fiber 10d may be referred to as cores 11da to 11dd.

Next, the fan-in/fan-out device 20 will be described. The fan-in/fan-out device may be referred to as a FIFO, and in the following, the fan-in/fan-out device 20 may be referred to as a FIFO 20.

As illustrated in FIG. 1, the plurality of FIFOs 20 and the plurality of multicore fibers 10a to 10d included in the tape core wire T correspond to each other on a one-to-one basis, and the corresponding multicore fibers 10a to 10d are connected to the respective FIFOs 20. Thus, the number of FIFOs 20 in the present embodiment is four. In the present embodiment, configurations of the FIFOs 20 are the same as each other. Therefore, the FIFO 20 connected to the multicore fiber 10a will be described below, and the other FIFOs 20 are denoted by the same reference numerals and redundant description is omitted unless otherwise specified.

The FIFO 20 of the present embodiment mainly includes a plurality of single-core fibers 30 and a waveguide member 40. The number of single-core fibers 30 is the same as the number of cores of the multicore fiber 10a, and is four in the present embodiment.

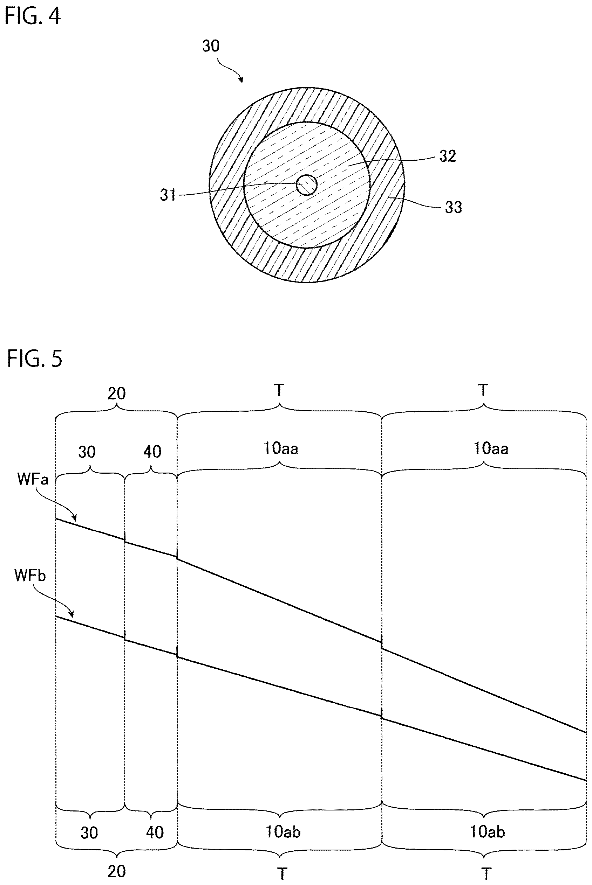

Configurations of the single-core fibers 30 are the same as each other. FIG. 4 is a view illustrating a cross section perpendicular to a longitudinal direction of a single-core fiber 30. The single-core fiber 30 according to the present embodiment includes a core 31, a cladding 32 surrounding an outer peripheral surface of the core 31 with no gap, and a coating layer 33 coating an outer peripheral surface of the cladding 32.

In the present embodiment, the outer shape in the cross section perpendicular to the longitudinal direction of the cladding 32 is substantially circular, and the core 31 is disposed at the center of the cladding 32. The diameter of the core 31 is substantially the same as the diameters of the cores 11a to 11d of the multicore fibers 10a to 10d of the tape core wire T.

The refractive index of the core 31 is higher than the refractive index of the cladding 32. Such a core 31 is made of, for example, silica glass to which a dopant having a high refractive index is added, and the cladding 32 is made of, for example, silica glass to which no dopant is added. In addition, the core 31 may be made of silica glass to which no dopant is added, and the cladding 32 may be made of silica glass to which a dopant having a low refractive index is added.

The coating layer 33 is made of a resin such as an ultraviolet curable resin.

The waveguide member 40 is a member that individually and optically couples the core 31 of the single-core fiber 30 and the cores 11a to 11d of the multicore fiber 10a of the tape core wire T. In the present embodiment, the waveguide member 40 includes a multicore fiber 50 and a pitch conversion unit 60.

The multicore fiber 50 of the present embodiment is different from the multicore fiber 10a of the tape core wire T in that the contents of the hydroxyl groups of the cores 11a to 11d are the same as each other and the colored layer 15 is not provided. Thus, the multicore fiber 50 includes the four cores 11a to 11d, the cladding 12, the primary coating layer 13, the secondary coating layer 14, and the marker 16. One end of the multicore fiber 50 is connected to one end of the multicore fiber 10a of the tape core wire T so that the cores 11a to 11d of the multicore fiber 50 are individually optically coupled to the cores 11a to 11d of the multicore fiber 10a of the tape core wire T. Note that, although the lengths of the multicore fibers 50 in the FIFOs 20 are substantially the same, the lengths of the multicore fibers 50 are different in FIG. 1 in order to prevent the drawing from being complicated.

The pitch conversion unit 60 of the present embodiment is a member that optically couples the cores 31 of the single-core fibers 30 and the cores 11a to 11d of the multicore fiber 10a of the tape core wire T individually by a waveguide (not illustrated). Examples of the waveguide member 40 include a waveguide substrate in which a waveguide is formed by irradiating a light transmissive base material with a femtosecond laser, a planar lightwave circuit (PLC) in which an element is added to a substrate made of silica glass to form a waveguide, silicon photonics in which a waveguide is made of silicon, a polymer waveguide, and the like.

Note that the waveguide member 40 only needs to be able to individually and optically couple the cores 31 of the single-core fibers 30 and the cores 11a to 11d of the multicore fiber 10a of the tape core wire T. For example, the waveguide member 40 may include only the pitch conversion unit 60. Further, the pitch conversion unit 60 may be a spatial optical system including a plurality of lenses. Further, the pitch conversion unit 60 may be formed integrally with the plurality of single-core fibers 30, and the connection portion between the single-core fiber 30 and the waveguide member 40 need not be formed. Such a waveguide member 40 can be formed, for example, by extending an end portion of a fiber bundle in which a plurality of single-core fibers 30 is bundled. Further, the waveguide member 40 can also be formed by bundling one end portions of the plurality of single-core fibers 30 or bundling one end portions of the plurality of single-core fibers 30 in which the outer diameter of the cladding is reduced at one end portion. In these cases, each core 31 of the single-core fiber 30 and each waveguide of the waveguide member 40 are optically coupled without interposing a boundary surface.

FIG. 5 is a diagram illustrating optical characteristics of the optical communication apparatus 1 according to the present embodiment, and is a diagram illustrating waveforms measured by an OTDR 70 illustrated in FIG. 1. An incident position of measurement light of the OTDR 70 as light of a specific wavelength is an end on the side opposite to the waveguide member 40 side of each single-core fiber 30 in each FIFO 20. Further, the measurement light is light having a wavelength other than a communication wavelength band, and the wavelength of the measurement light is 1360 nm or more and less than 1460 nm, which is a so-called E band. Furthermore, the wavelength of the measurement light is shorter than the communication wavelength band, and in the present embodiment, the communication wavelength band is 1530 nm or more and less than 1565 nm, which is a so-called C band, and 1565 nm or more and less than 1625 nm, which is a so-called L band. FIG. 5 illustrates a waveform WFa when the measurement light is incident on the single-core fiber 30 optically coupled to the core 11aa of the multicore fiber 10a of the tape core wire T and a waveform WFb when the measurement light is incident on the single-core fiber 30 optically coupled to the core 11ab of the multicore fiber 10a, which are aligned in the vertical direction.

As illustrated in FIG. 5, in the present embodiment, inclinations of portions of the waveform WFa corresponding to the two tape core wires T are larger than inclinations of portions of the waveform WFb corresponding to the two tape core wires T. That is, a propagation loss of the measurement light in the core 11aa of the multicore fiber 10a is larger than a propagation loss in the core 11ab. In a case where the wavelength of light propagating through the core is in the E-band, it is known that the loss of light due to the hydroxyl group contained in the core increases, and this is sometimes referred to as OH loss. In the present embodiment, due to the OH loss, the propagation loss of the measurement light in the core 11aa of the multicore fiber 10a is larger than the propagation loss in the core 11ab.

Note that, although not illustrated, waveforms when the measurement light is incident on the cores 11ac and 11ad of the multicore fiber 10a and the single-core fiber 30 optically coupled to the cores 11ba to 11bd, 11ca to 11cd, and 11da to 11dd of the multicore fibers 10b to 10d are substantially the same as the waveform WFb. Thus, the propagation loss of the core 11aa in the multicore fiber 10a of the measurement light is different from propagation losses of the cores 11ba, 11ca, and 11da corresponding to the cores 11aa in the other multicore fibers 10b to 10d. Further, the waveform when light of the communication wavelength band is incident on each of the single-core fibers 30 is substantially the same as the waveform WFb. Thus, a difference between a propagation loss in the core 11aa of the measurement light and propagation losses in the cores 11ba, 11ca, and 11da corresponding to the core 11aa is larger than a difference between a propagation loss in the core 11aa of light having the wavelength of the communication wavelength band and propagation losses in the cores 11ba, 11ca, and 11da corresponding to the core 11aa. Here, the cores 11ba, 11ca, and 11da corresponding to the core 11aa are cores whose positions based on the marker 16 are substantially the same as that of the core 11aa. That is, cores that can be identified by a recognition method common to a recognition method of the core 11aa based on the marker 16 are the cores 11ba, 11ca, and 11da corresponding to the core 11aa.

As described above, the tape core wire T as the fiber assembly of the present embodiment is formed by bundling two or more multicore fibers 10a to 10b. The propagation loss of the core 11aa of the measurement light in the multicore fiber 10a is different from the propagation losses of the measurement light of the cores 11ba, 11ca, and 11da corresponding to the core 11aa in the other multicore fibers 10b to 10d. Thus, with the tape core wire T of the present embodiment, when the tape core wire T is connected to another tape core wire T as an optical communication member or the FIFO 20, the multicore fiber 10a can be identified by examining propagation losses of measurement light of the cores 11aa, 11ba, 11ca, and 11da.

In optical communication, it is preferable that a variation in loss of light propagating through each core is small. In the tape core wire T of the present embodiment, the wavelength of the measurement light is a wavelength other than the communication wavelength band. Thus, with the tape core wire T of the present embodiment, by using the measurement light in order to examine the multicore fiber 10a, the multicore fiber 10a can be identified even when variation in propagation of the light having the wavelength of the communication wavelength band in the core is small.

Note that the method of examining the propagation loss is not limited to measurement by the OTDR 70, and may be measurement by, for example, OFDR, OLTS, or the like. When the OTDR and the OFDR are used, the propagation loss can be examined only by causing light to enter from one end side of the tape core wire T, and the cost can be reduced because an operator is not required for the other end side of the tape core wire T.

In the present embodiment, the wavelength of the measurement light is shorter than the communication wavelength band. As the wavelength of light propagating through the core is shorter, inter-core crosstalk of the light tends to be suppressed. Thus, with the tape core wire T of the present embodiment, it is possible to suppress the inter-core crosstalk of the measurement light propagating through the cores 11aa, 11ba, 11ca, and 11da when examining the propagation losses of the cores 11aa, 11ba, 11ca, and 11da using the above-described measurement light, as compared with a case where the communication wavelength band is the same and the wavelength of the measurement light is longer than the communication wavelength band. Thus, with the tape core wire T of the present embodiment, the multicore fiber 10a can be more easily identified.

In the present embodiment, the wavelength of the measurement light is a so-called E band, which is 1360 nm or more and less than 1460 nm. According to the present embodiment, as described above, by making the content of the hydroxyl group of the core 11aa larger than the contents of the hydroxyl groups of the cores 11ba, 11ca, and 11da corresponding to the core 11aa, the propagation loss of the measurement light in the core 11aa can be made larger than the propagation losses in the cores 11ba, 11ca, and 11da corresponding to the core 11aa. Thus, the difference between the propagation loss in the core 11aa of the measurement light and the propagation losses in the cores 11ba, 11ca, and 11da corresponding to the core 11aa can be made larger than the difference between the propagation loss in the core 11aa of the light having the wavelength of the communication wavelength band and the propagation losses in the cores 11ba, 11ca, and 11da corresponding to the core 11aa. Further, the wavelength of light used in optical communication may be in the E-band, and there are existing OTDR, OFDR, OLTS, and the like using light in the wavelength band. Thus, according to the present embodiment, for example, the propagation loss can be measured even in the existing OTDR, OFDR, OLTS, and the like. Therefore, the multicore fiber 10a can be easily identified.

In addition, the propagation loss of light of a specific wavelength only needs to be different between the core 11aa and the cores 11ba, 11ca, and 11da corresponding to the core 11aa. For example, the wavelength of the measurement light may be the wavelength of the communication wavelength band, the propagation loss in the core 11aa of the light of the specific wavelength may be smaller than the propagation loss in the cores 11ba, 11ca, and 11da of the light of the specific wavelength, and the propagation losses in the cores 11ba, 11ca, and 11da of the light of the specific wavelength may be different from each other. In addition, in each of the multicore fibers 10a to 10d, the propagation losses of the cores 11aa to 11da of the light of the specific wavelength may be the same.

Further, the communication wavelength band and the wavelength of the measurement light are not limited. For example, when the wavelength of light propagating through the core is 400 nm or more and less than 600 nm, the loss of light tends to increase depending on the contents of nickel, chromium, cobalt, iron, and copper in the core. When the wavelength of light propagating through the core is 600 nm or more and less than 800 nm, the loss of light tends to increase depending on the contents of nickel, chromium, cobalt, and iron in the core. When the wavelength of light propagating through the core is 800 nm or more and less than 900 nm, the loss of light tends to increase depending on the content of chromium in the core. When the wavelength of light propagating through the core is 900 nm or more and less than 1000 nm, the loss of light tends to increase depending on the contents of chromium and hydroxyl groups in the core. When the wavelength of light propagating through the core is 1000 nm or more and less than 1260 nm, which is a so-called T band, the loss of light tends to increase depending on the contents of nickel, cobalt, and hydroxyl groups in the core. When the wavelength of light propagating through the core is 1260 nm or more and less than 1360 nm, which is a so-called O band, the loss of light tends to increase depending on the contents of nickel and cobalt in the core. When the wavelength of light propagating through the core is in the E-band, the loss of light tends to increase depending on the contents of nickel, cobalt, and hydroxyl groups in the core. When the wavelength of light propagating through the core is 1460 nm or more and less than 1530 nm which is a so-called S band, when the wavelength is 1530 nm or more and less than 1565 nm which is a so-called C band, when the wavelength is 1565 nm or more and less than 1625 nm which is a so-called L band, and when the wavelength is 1625 nm or more and less than 1675 nm which is a so-called U band, the loss of light tends to increase depending on the contents of nickel and cobalt in the core. When the wavelength of light propagating through the core is 1675 nm or more, the loss of light tends to increase depending on the contents of hydroxyl group, cobalt, and nickel in the core. Thus, for example, the above-described configuration can be obtained by adjusting the contents of the substances in the core 11a of the multicore fiber 10a. Therefore, for example, the communication wavelength band may be at least one of the C band, the L band, the O band, or the S band, and the wavelength band other than the communication wavelength band may be at least one of the T band, the E band, the U band, an ultraviolet band having a wavelength of 10 nm or more and less than 360 nm, a visible light band having a wavelength of 360 nm or more and less than 830 nm, or a band excluding the C band, the L band, the O band, and the S band in the infrared region having a wavelength of 830 nm or more and 2.5 µm or less. Note that the method for making the propagation loss different is not limited to the adjustment of the content of the substance in the core.

In addition, the wavelength of the measurement light may be 800 nm or more and 950 nm or less. The wavelength of light used in multi-mode fiber communication may be 800 nm or more and 950 nm or less, and there are existing OTDR, OLTS, and the like using light in the wavelength band. Thus, with such a configuration, for example, the propagation loss can be measured even in an existing OTDR, OLTS, or the like. Therefore, the multicore fiber 10a can be easily identified.

In addition, the wavelength of the measurement light may be 1625 nm or more and less than 1675 nm, which is a so-called U band. The wavelength of light used in multi-mode fiber communication may be a U-band wavelength, and there are existing OTDR, OLTS, and the like using light in the wavelength band. Thus, with such a configuration, for example, the propagation loss can be measured even in an existing OTDR, OLTS, or the like. Therefore, the multicore fiber 10a can be easily identified.

In addition, the wavelength of the measurement light may be 360 nm or more and less than 830 nm. Light having a wavelength of 360 nm or more and less than 830 nm is visible light, and the light appears dark as the energy decreases. Thus, with such a configuration, for example, the multicore fiber 10a can be identified by visually checking the brightness of return light when the above-described measurement light is caused to enter the cores 11aa, 11ba, 11ca, and 11da from one end side of the tape core wire T. In addition, since the multicore fiber 10a can be identified without using a device for measuring a propagation loss, the cost can be reduced.

In addition, the difference between the propagation loss in the core 11aa of the measurement light and the propagation losses in the cores 11ba, 11ca, and 11da corresponding to the core 11aa is preferably 0.005 dB/km or more, more preferably 0.01 dB/km or more, still more preferably 0.03 dB/km or more, and yet more preferably 0.05 dB/km or more when the wavelength of the measurement light is in the communication wavelength band. With such a configuration, it is possible to measure a difference in propagation loss even in a measurement device (for example, a general-purpose measuring device) in which the minimum value at which the propagation loss can be measured is large, and thus it is possible to easily identify the multicore fiber 10a. In addition, when the wavelength of light is the wavelength of the communication wavelength band, the above-described difference in propagation loss is preferably 0.1 dB/km or less, and more preferably 0.06 dB/km or less. With such a configuration, it is possible to suppress variations in communication quality among cores. In addition, when the wavelength of light is a wavelength other than the communication wavelength band, the above-described difference in propagation loss is preferably 0.1 dB/km or more, more preferably 0.5 dB/km or more, and still more preferably 1.0 B/km or more. The wavelength of the light is a wavelength other than the communication wavelength band, the communication quality is not affected even if the loss of the light is large, and with such a configuration, the multicore fiber 10a can be easily identified and, furthermore, when the above-described difference is 0.1 dB/km or more, the difference in the propagation loss can be measured even with a measurement device (for example, a general-purpose measuring device) having a large minimum measurable value of the propagation loss, and thus the multicore fiber 10a can be easily identified. Here, particularly in the case of a short multicore fiber, since the propagation loss is small, the error of the measured propagation loss may increase. However, since the above-described difference in propagation loss is 0.1 dB/km or more, even in the case of the short multicore fiber 10a, an error can be suppressed and the multicore fiber 10a can be easily identified. In addition, a difference in propagation loss between cores in a general multicore fiber tends to be less than 0.1 dB/km. Thus, with such a configuration, the multicore fiber 10a can be easily identified.

### (Second Embodiment)

Next, a second embodiment of the present invention will be described in detail. Note that the same or equivalent components as those in the first embodiment are denoted by the same reference numerals, and redundant description is omitted unless otherwise specified.

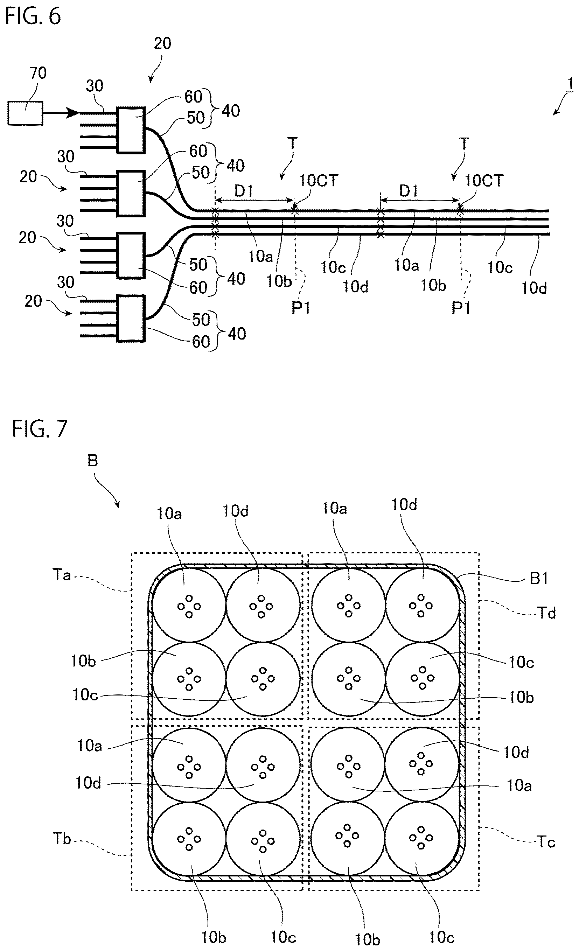

FIG. 6 is a conceptual diagram illustrating an optical communication apparatus according to the present embodiment. As illustrated in FIG. 6, in the optical communication apparatus 1 of the present embodiment, a multicore fiber 10a of a tape core wire T is different from the multicore fiber 10a of the first embodiment. Note that the content of the hydroxyl group of the core 11aa of the multicore fiber 10a is substantially the same as the contents of the hydroxyl groups of the cores 11ba, 11ca, and 11da of the multicore fibers 10b to 10d corresponding to the core 11aa.

In the present embodiment, the multicore fiber 10a is formed by connecting end portions of a plurality of optical fiber portions to each other, and the multicore fibers 10b to 10d are formed by one optical fiber portion. Thus, in the cores 11aa, 11ab, 11ac, and 11ad of the multicore fiber 10a, a connection loss that is a loss of light occurs at a connection portion 10CT between optical fiber portions. Therefore, the loss of light at the connection portion 10CT in the core 11aa is different from a loss of light at a position P1 corresponding to the connection portion 10CT of the core 11aa in the cores 11ba, 11ca, and 11da of the multicore fibers 10b to 10d corresponding to the core 11aa. Specifically, the position P1 is a position equivalent to a position separated along the longitudinal direction from tips of the other multicore fibers 10b to 10d on the waveguide member 40 side by a distance D1 from a tip of the multicore fiber 10a on the waveguide member 40 side to the connection portion 10CT along the longitudinal direction of the multicore fiber 10a, and is indicated by a broken line in FIG. 6. Even in the present embodiment, for example, the multicore fiber 10a can be easily identified by the OTDR 70. Here, in the case of a short multicore fiber, since the propagation loss is small, the measured error of the propagation loss may be large. However, according to the present embodiment, even if the multicore fibers 10a to 10d are short, errors can be suppressed to identify the multicore fiber 10a.

Note that the loss of light at the connection portion 10CT in the core 11aa only needs to be different from the loss of light at the above-described position P1 in the cores 11ba, 11ca, and 11da corresponding to the core 11aa. To this extent, for example, the other multicore fibers 10b to 10d may also have a configuration in which a plurality of optical fiber portions is connected to each other in the longitudinal direction. In addition, as long as the loss of light at the connection portion 10CT in the core 11aa is different from the loss of light at the above-described position P1 in the cores 11ba, 11ca, and 11da, the connection portion 10CT between the optical fiber portions may be provided at the above-described position P1 in the multicore fibers 10b to 10d. In this case, for example, inclinations of joining surfaces of the optical fiber portions at the connection portions 10CT of the multicore fibers 10b to 10d are made different from an inclination of a joining surface of the optical fiber portion at the connection portion 10CT of the optical fiber portions of the multicore fibers 10a. The inclination of the joining surface of the optical fiber portion is an inclination with respect to a direction perpendicular to the extending direction of the optical fiber portion. With such a configuration, the loss of light at the connection portion 10CT in the core 11aa can be made different from the loss of light at the above-described position P1 in the cores 11ba, 11ca, and 11da. The difference between the loss of light at the connection portion 10CT in the core 11aa and the loss of light at the above-described position P1 in the cores 11ba, 11ca, and 11da is preferably 0.01 dB or more, more preferably 0.1 dB or more, and still more preferably 0.5 dB or more.

The number of connection portions 10CT is not limited, and the number of the connection portions 10CT of the multicore fiber 10a may be different from the numbers of the connection portions 10CT of the other multicore fibers 10b to 10d. In this case, even if the loss of light at the connection portion 10CT in the core 11aa is the same as the loss of light at the above-described position P1 in the cores 11ba, 11ca, and 11da, the multicore fiber 10a can be identified by measuring the number of connection portions 10CT by, for example, the OTDR 70 or the like. In addition, the multicore fiber 10a is identified on the basis of a discrete natural number such as the number of connection portions 10CT, but a loss such as a propagation loss generally does not become a natural number. Thus, it is possible to easily identify the multicore fiber 10a as compared with the case of identifying a multicore fiber on the basis of a difference in loss such as a propagation loss. In addition, even if the multicore fiber 10a is short, an error can be suppressed to identify the multicore fiber 10a.

In addition, when the number of connection portions 10CT of the multicore fiber 10a is the same as the numbers of connection portions 10CT of the other multicore fibers 10b to 10d, at least one connection portion 10CT of the other multicore fibers 10b to 10d may be located at a position other than the above-described position P1.

### (Third Embodiment)

Next, a third embodiment of the present invention will be described in detail. Note that the same or equivalent components as those in the first embodiment are denoted by the same reference numerals, and redundant description is omitted unless otherwise specified.

An optical communication apparatus 1 according to the present embodiment is different from the optical communication apparatus 1 according to the first embodiment in that the optical communication apparatus 1 includes two bundle units B as fiber assemblies instead of the two tape core wires T. Thus, the tape core wire T of FIG. 1 is replaced with a bundle unit with reference to FIG. 1.

In the present embodiment, configurations of the respective bundle units are the same. Thus, in the following description, one bundle unit will be described, and the other bundle unit are denoted by the same reference numerals, and redundant description is omitted unless otherwise specified.

FIG. 7 is a view schematically illustrating a cross section perpendicular to the longitudinal direction of the bundle unit in the present embodiment. Note that, in FIG. 7, hatching of the multicore fiber is omitted, and the outer diameter and the core of the multicore fiber are illustrated. As illustrated in FIG. 7, the bundle unit B includes a plurality of tape core wires Ta to Td, which is a fiber bundle in which two or more multicore fibers are bundled, and a bundle material B1 as main components. The bundle material B1 of the present embodiment is a tape-shaped member, and these tape core wires Ta to Td are bundled by winding the bundle material B1 around the plurality of tape core wires Ta to Td. The bundle material B1 only needs to be able to bundle the plurality of tape core wires Ta to Td, and may be, for example, a thread-like or net-like member. Examples of the material constituting the bundle material B1 include resin. FIG. 7 illustrates an example in which the bundle unit B includes four tape core wires Ta to Td, but the number of tape core wires constituting the bundle unit B is not limited.

Configurations of the tape core wires Ta to Td of the present embodiment are similar to those of the tape core wire T of the first embodiment. In the present embodiment, different identification marks are provided on the outer peripheral surfaces of the respective tape core wires Ta to Td.

In the present embodiment, a propagation loss of the measurement light of the core 11aa of the multicore fiber 10a in the tape core wire Ta is different from propagation losses of the measurement light of the cores 11aa of the multicore fibers 10a in the other tape core wires Tb to Td corresponding to the core 11aa. As a method for making the propagation loss different, for example, it is possible to change the amount of an element that easily absorbs the measurement light added to each core 11aa.

One end of each of the tape core wires Ta to Td of one bundle unit B having such a configuration is connected to the other end of each of the tape core wires Ta to Td of the other bundle unit B. At this time, the tape core wires Ta to Td having the same identification mark are connected to each other. Between the tape core wires Ta to Td connected to each other, the multicore fibers 10a to 10d having the same color of the colored layer 15 are connected to each other as in the first embodiment. In this manner, the cores 11aa to 11ad of the multicore fibers 10a to 10d in one bundle unit B are optically connected to the cores 11aa to 11ad corresponding to the cores 11aa to 11ad in the other bundle unit B.

In the present embodiment, the number of FIFOs 20 is the same as the number of multicore fibers in the bundle unit B, the FIFO 20 is connected to each multicore fiber, and each core of each multicore fiber and the core 31 of each single-core fiber 30 of the FIFO 20 are optically coupled.

In the present embodiment, as described above, the propagation loss of the measurement light of the specific core 11aa in the specific multicore fiber 10a of the specific tape core wire Ta is different from the propagation loss of the measurement light of the core 11aa corresponding to the above-described specific core 11aa in the multicore fiber 10a corresponding to the above-described specific multicore fibers 10a in the other tape core wires Tb to Td. Thus, with the bundle unit B of the present embodiment, when the bundle unit B is connected to another bundle unit B or the FIFO 20 as an optical communication member, the multicore fiber 10a in the tape core wire Ta can be identified by examining the propagation loss of the measurement light of the core 11aa of the multicore fiber 10a in each of the tape core wire Ta to Td, and as a result, the tape core wire Ta can be identified. Here, the multicore fiber 10a corresponding to the specific multicore fiber 10a of the tape core wire Ta in the other tape core wires Tb to Td is a multicore fiber in which the color of the colored layer 15 is the same as that of the specific multicore fiber 10a. That is, a multicore fiber that can be identified by a recognition method common to the recognition method of the multicore fiber 10a on the basis of the color of the multicore fiber 10a of the tape core wire Ta is the multicore fiber 10a in the other tape core wires Tb to Td.

Note that a propagation loss of light of a specific wavelength only needs to be different between the core 11aa of the multicore fiber 10a in the tape core wire Ta and the core 11aa of the multicore fiber 10a corresponding to the multicore fiber 10a in the other tape core wires Tb to Td. For example, in each of the tape core wires Ta to Td, propagation losses of light of specific wavelengths in the cores 11ba, 11ca, and 11da of the other multicore fibers 10b to 10d corresponding to the core 11aa of the multicore fiber 10a may be the same.

### (Fourth Embodiment)

Next, a third embodiment of the present invention will be described in detail. Note that the same or equivalent components as those in the first embodiment are denoted by the same reference numerals, and redundant description is omitted unless otherwise specified.

The optical communication apparatus 1 of the present embodiment is different from the optical communication apparatus 1 of the first embodiment in that two cables as a fiber assembly are provided instead of the two tape core wires T. Thus, the tape core wire T of FIG. 1 is replaced with a cable with reference to FIG. 1.

In the present embodiment, configurations of the cables are the same as each other. Thus, in the following description, one cable will be described, and the other cable will be denoted by the same reference numeral, and redundant description is omitted unless otherwise specified.

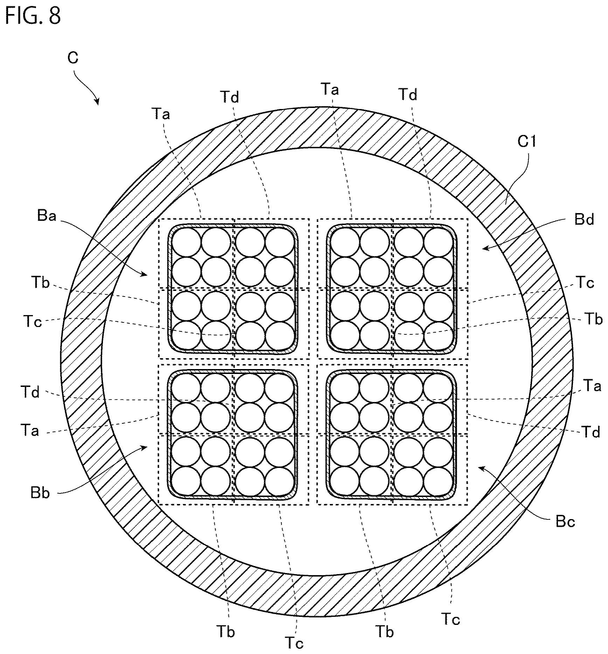

FIG. 8 is a view schematically illustrating a cross section perpendicular to the longitudinal direction of the cable in the present embodiment. Note that, in FIG. 8, hatching of the multicore phi is omitted, and the outer diameter of the multicore phi is illustrated. As illustrated in FIG. 8, the cable C mainly includes a plurality of bundle units Ba to Bd, which are fiber bundles in which two or more multicore fibers are bundled, and a sheath C1.

The sheath C1 is a tubular member. The plurality of bundle units Ba to Bd is accommodated in an internal space of the sheath C1, and the plurality of bundle units Ba to Bd is bundled by the sheath C1. Examples of the material constituting the sheath C1 include a resin.

The configuration of the bundle units Ba to Bd of the present embodiment is similar to that of the bundle unit B of the third embodiment. In the present embodiment, the color of the bundle material B1 in each of the bundle units Ba to Bd is different from each other.

In the present embodiment, the propagation loss of the measurement light of the core 11aa of the multicore fiber 10a in the tape core wire Ta of the bundle unit Ba is different from the propagation loss of the measurement light of the core 11aa corresponding to the core 11aa of the multicore fiber 10a corresponding to the above-described specific multicore fiber 10a in the tape core wire Ta of each of the other bundle units Bb to Bd. As a method for making the propagation loss different, for example, it is possible to change the amount of an element that easily absorbs the measurement light added to each core 11aa.

One end of each of the bundle units Ba to Bd of one cable C having such a configuration is connected to the other end of each of the bundle units Ba to Bd of the other cable C. At this time, the bundle units Ba to Bd having the same color of the bundle material B1 are connected, and the tape core wires Ta to Td having the same identification mark are connected to each other between the bundle units Ba to Bd connected to each other, similarly to the third embodiment. Between the tape core wires Ta to Td connected to each other, the multicore fibers 10a to 10d having the same color of the colored layer 15 are connected to each other as in the first embodiment. In this manner, the cores 11aa to 11ad of the multicore fibers 10a to 10d in one cable C are optically connected to the cores 11aa to 11ad corresponding to the cores 11aa to 11ad in the other cable C.

In the present embodiment, the number of FIFOs 20 is the same as the number of multicore fibers in the cable C, the FIFO is connected to each multicore fiber, and each core of each multicore fiber and the core 31 of each single-core fiber 30 of the FIFO 20 are optically coupled.

In the present embodiment, as described above, the propagation loss of the measurement light of the specific core 11aa in the specific multicore fiber 10a of the specific bundle unit Ba is different from the propagation loss of the measurement light of the core 11aa corresponding to the above-described specific core 11aa in the above-described multicore fiber 10a corresponding to the specific multicore fiber 10a in the other bundle units Bb to Bd. Thus, with the cable C of the present embodiment, when connected to another cable C or FIFO 20 as an optical communication member, the multicore fiber 10a of the tape core wire Ta in the bundle unit Ba can be identified by examining the propagation loss of the measurement light of the core 11aa of the multicore fiber 10a of the tape core wire Ta in each of the bundle units Bb to Bd, and as a result, the bundle unit Ba can be identified. Here, the multicore fibers 10a in the other bundle units Bb to Bd corresponding to the specific multicore fiber 10a of the bundle unit Ba are multicore fibers in which the color of the colored layer 15 is the same as that of the specific multicore fiber 10a among multicore fibers included in a tape core wire provided with the same identification mark as that of the tape core wire Ta including the specific multicore fiber 10a.

Note that the propagation loss of light of a specific wavelength only needs to be different between the core 11aa of the multicore fiber 10a in the tape core wire Ta of the bundle unit Ba and the core 11aa of the multicore fiber 10a corresponding to the multicore fiber 10a in the tape core wire Ta of each of the other bundle units Bb to Bd. For example, in each of the tape core wires Ta to Ta in each of the bundle units Bb to Bd, propagation losses of light of specific wavelengths in the cores 11ba, 11ca, and 11da of the other multicore fibers 10b to 10d corresponding to the core 11aa of the multicore fiber 10a may be the same.

Although the present invention has been described by taking the above-described embodiment as an example, the present invention is not limited thereto. In the first embodiment, the tape core wire T in which the propagation loss of the measurement light is different between the core 11aa in the multicore fiber 10a and the cores 11ba, 11ca, and 11da corresponding to the cores 11aa in the other multicore fibers 10b to 10d has been described as an example. In the second embodiment, the tape core wire T in which the core 11aa of the multicore fiber 10a and the cores 11ba, 11ca, and 11da corresponding to the cores 11aa of the other multicore fibers 10b to 10d have different connection losses has been described as an example. However, an optical characteristic of a specific core in a specific multicore fiber only needs to be different from optical characteristics of cores corresponding to the above-described specific cores in other multicore fibers. In addition, a plurality of specific cores may be provided, and in this case, the above-described optical characteristic may be a predetermined value obtained on the basis of the loss of light of a specific wavelength of the plurality of cores. Examples of the predetermined value include inter-core crosstalk, an average value, a maximum value, a minimum value, a value obtained by subtracting the minimum value from the maximum value, a median value, a mode value, a quantile, and a dispersion in propagation loss of light of a specific wavelength. In addition, when there are three or more specific cores described above, the inter-core crosstalk as the predetermined value may be an average value, a maximum value, a minimum value, a value obtained by subtracting the minimum value from the maximum value, a median value, a mode value, a quantile, a dispersion, or the like of the inter-core crosstalk in a plurality of sets of cores. Examples of the quantile include a first quantile and a third quantile.

These predetermined values are values caused by a plurality of cores in the multicore fiber. Thus, by setting the above-described optical characteristics to these predetermined values, it is possible to identify a specific multicore fiber with high accuracy as compared with a case where the predetermined value is a value caused by one core in the multicore fiber. In addition, the degree of freedom of the type of optical characteristics for identifying a specific multicore fiber increases, and it becomes easy to identify a specific multicore fiber. In addition, when a predetermined value that is an arithmetic result is used, the degree of freedom of selecting a core having a large loss as a specific core can be increased, so that a specific multicore fiber can be easily identified. Note that the above-described specific cores are preferably all cores of a specific multicore fiber. In this case, the predetermined value is a value caused by all the cores in the multicore fiber. Thus, by adopting such a configuration, a specific multicore fiber can be identified with higher accuracy as compared with a case where the predetermined value is a value caused by one core in the multicore fiber.

In addition, when the predetermined value is any of an average value, a maximum value, a minimum value, a value obtained by subtracting the minimum value from the maximum value, and a mode value in the propagation loss of the light of the specific wavelength, a difference between the predetermined value in the specific multicore fiber and the predetermined value in the other multicore fiber is preferably 0.005 dB/km or more. In addition, from the viewpoint of suppressing variations in communication quality among cores in a multicore fiber, this difference is preferably 0.1 dB/km or less, and more preferably 0.06 dB/km or less.

In addition, in a case where the predetermined value is any of the median value, the order, and the dispersion in the propagation loss of the light of the specific wavelength, the difference between the predetermined value in the specific multicore fiber and the predetermined value in the other multicore fiber is preferably 0.005 dB/km or more. In addition, from the viewpoint of suppressing variations in communication quality among cores in a multicore fiber, this difference is preferably 0.03 dB/km or less, and more preferably 0.01 dB/km or less.

In addition, in a case where the predetermined value is any of inter-core crosstalk of light of a specific wavelength, an average value, a maximum value, a minimum value, a value obtained by subtracting the minimum value from the maximum value, a median value, a mode value, a quantile, and a dispersion of the inter-core crosstalk, the difference between the predetermined value in a specific multicore fiber and the predetermined value in another multicore fiber is preferably 1 dB or more, more preferably 2 dB or more, still more preferably 3 dB or more, and yet more preferably 5 dB or more. With such a configuration, it is possible to easily identify a specific multicore fiber even in a measurement device having a large minimum measurable value of inter-core crosstalk. In addition, when the above-described difference is 1 dB or more, it is possible to suppress difficulty in identifying a specific multicore fiber due to a measurement error. In addition, the above above-described difference is preferably 5 dB or less from the viewpoint of suppressing variations in communication quality among cores.

In the third embodiment, the bundle unit B in which the propagation loss of the measurement light of the specific core 11aa in the specific multicore fiber 10a of the specific tape core wire Ta is different from the propagation loss of the measurement light of the core 11aa corresponding to the above-described specific core 11aa in the multicore fiber 10a corresponding to the above-described specific multicore fiber 10a in the other tape core wires Tb to Td has been described as an example. In addition, in the fourth embodiment, the cable C in which the propagation loss of the measurement light of the specific core 11aa in the specific multicore fiber 10a of the specific bundle unit Ba is different from the propagation loss of the measurement light of the core 11aa corresponding to the above-described specific core 11aa in the multicore fiber 10a corresponding to the above-described specific multicore fiber 10a in the other bundle units Bb to Bd has been described as an example. However, an optical characteristic of a specific core in a specific multicore fiber of a specific fiber bundle only needs to be different from an optical characteristic of a core corresponding to a specific core in a multicore fiber corresponding to a specific multicore fiber in another fiber bundle.

For example, in the bundle unit B exemplified in the third embodiment and the cable C exemplified in the fourth embodiment, the optical characteristic may be a connection loss. For example, in the third embodiment, as in the second embodiment, the specific multicore fiber 10a of the specific tape core wire Ta may be formed by connecting end portions of a plurality of optical fiber portions to each other. In addition, in the fourth embodiment, the specific multicore fiber 10a of the bundle unit Ba may be formed by connecting end portions of a plurality of optical fiber portions to each other. In these cases, the loss of light at the connection portion between the optical fiber portions in the specific multicore fiber 10a is made different from the loss of light at the position corresponding to the connection portion of the specific multicore fiber 10a in the multicore fiber 10a corresponding to the specific multicore fiber 10a in the other tape core wires Tb to Td and the other bundle units Bb to Bd. In this way, as in the second embodiment, even if the multicore fibers 10a to 10d are short, errors can be suppressed and the multicore fiber 10a can be identified.

In addition, in the bundle unit B exemplified in the third embodiment and the cable C exemplified in the fourth embodiment, the following may be performed as long as the loss of light at the connection portion between the optical fiber portions in the specific multicore fiber 10a is different from the loss of light at the position corresponding to the connection portion of the specific multicore fiber 10a in the multicore fiber 10a corresponding to the specific multicore fiber 10a in the other tape core wires Tb to Td and the other bundle units Bb to Bd. The multicore fiber 10a corresponding to the specific multicore fiber 10a in the other tape core wires Tb to Td and the other bundle units Bb to Bd may have a configuration in which a plurality of optical fiber portions is connected to each other in the longitudinal direction together with the specific multicore fiber 10a. In this case, a connection portion between the optical fiber portions may be provided at a position corresponding to the connection portion of the specific multicore fiber 10a in the multicore fiber 10a corresponding to the specific multicore fiber 10a in the other tape core wires Tb to Td or the other bundle units Bb to Bd.

Further, in a case where, in the bundle unit B exemplified in the third embodiment or the cable C exemplified in the fourth embodiment, the multicore fiber 10a corresponding to the specific multicore fiber 10a in the other tape core wires Tb to Td or the other bundle units Bb to Bd have a configuration in which a plurality of optical fiber portions is connected to each other in the longitudinal direction together with the specific multicore fiber 10a, the number of connection portions is not limited. For example, the number of connection portions between the optical fiber portions in the specific multicore fiber 10a may be different from or the same as the number of connection portions between the optical fiber portions in the multicore fiber 10a corresponding to the specific multicore fiber 10a in the other tape core wire Tb to Tb or the other bundle units Bb to Bd. When the number of connection portions is the same, at least one connection portion of the multicore fiber 10a corresponding to the specific multicore fiber 10a in the other tape core wires Tb to Td or the other bundle units Bb to Bd may be located at a position other than the position corresponding to the connection portion of the specific multicore fiber 10a.

In addition, in the bundle unit B exemplified in the third embodiment and the cable C exemplified in the fourth embodiment, a plurality of specific cores may be provided, or all the cores of a specific multicore fiber may be provided. In this case, the optical characteristics different between the specific core in the specific multicore fiber 10a and the cores corresponding to the specific cores in the other tape core wires Tb to Td and the other bundle units Bb to Bd may be predetermined values obtained on the basis of the loss of light of the specific wavelength of the cores described above.

In addition, in the bundle unit B exemplified in the third embodiment and the cable C exemplified in the fourth embodiment, as in the first embodiment, the wavelength of the measurement light may be 800 nm or more and 950 nm or less, 1625 nm or more and less than 1675 nm, or 360 nm or more and less than 830 nm.

In addition, in the bundle unit B exemplified in the third embodiment and the cable C exemplified in the fourth embodiment, the difference between the propagation loss of the measurement light in the specific core of the specific multicore fiber 10a and the propagation loss of the measurement light in the core corresponding to the specific core in the other tape core wires Tb to Td and the other bundle units Bb to Bd is preferably similar to that in the first embodiment. That is, when the wavelength of the measurement light is in the communication wavelength band, the above-described difference in propagation loss is preferably 0.005 dB/km or more, more preferably 0.01 dB/km or more, still more preferably 0.03 dB/km or more, and yet more preferably 0.05 dB/km or more. In addition, when the wavelength of the measurement light is the wavelength of the communication wavelength band, the above-described difference in propagation loss is preferably 0.1 dB/km or less, and more preferably 0.06 dB/km or less. Furthermore, when the wavelength of the measurement light is a wavelength other than the communication wavelength band, the above-described difference in propagation loss is preferably 0.1 dB/km or more, more preferably 0.5 dB/km or more, and still more preferably 1.0B/km or more.

Further, in the first to fourth embodiments, the cores 11ba, 11ca, and 11da corresponding to the cores 11aa of the specific multicore fiber 10a in the other multicore fibers 10b to 10d are cores whose positions based on the marker 16 as an identifier are substantially the same as those of the core 11aa. However, the cores corresponding to each other are not limited to cores whose positions based on the marker 16 are the same, and the multicore fiber need not include the marker 16. For example, when printing as an identifier or marking such as a barcode is performed on a part of outer peripheral surfaces of the multicore fibers 10a to 10d, the cores corresponding to each other may be cores whose positions based on the marking are the same. In addition, in a case where the arrangement of the plurality of cores is non-rotationally symmetric, the cores corresponding to each other may be cores arranged at the same position in each multicore fiber. Further, the multicore fiber includes a core disposed at the center of the cladding 12, the cores corresponding to each other may be cores disposed at the center of the cladding 12. In addition, even if there is no identifier such as the marker 16 and the arrangement of the plurality of cores is rotationally symmetric, on the premise that there is no twist or rotation of the multicore fiber, in a case where the multicore fibers have the same core arrangement in a cross-sectional view, the cores corresponding to each other may be cores arranged in the same direction with respect to the center of the cladding 12. Furthermore, when a plurality of multicore fibers is connected to a plurality of transceivers via a plurality of single-core fibers on a one-to-one basis, the cores corresponding to each other may be cores having the same port number of each transceiver connected to each multicore fiber. That is, cores that can be identified by a recognition method common to a recognition method by visual recognition of the specific core 11aa in the multicore fiber 10a are the cores 11ba, 11ca, and 11da in the multicore fibers 10b to 10d corresponding to the core 11aa.

Further, in the third embodiment, the multicore fibers 10a in the other tape core wires Tb to Td corresponding to the specific multicore fibers 10a of the tape core wire Ta are multicore fibers in which the color of the colored layer 15 as an identifier is the same as that of the specific multicore fibers 10a. However, the multicore fibers corresponding to each other are not limited to multicore fibers in which the colors of the colored layers 15 are the same, and the colors of the colored layers 15 of the multicore fibers may be the same, or the multicore fibers need not include the colored layers 15. For example, when printing as an identifier or marking such as a barcode is performed on the outer peripheral surfaces of the multicore fibers 10a to 10d, the multicore fibers corresponding to each other may be multicore fibers having the same marking. In a case where the arrangement of the multicore fibers in the tape core wire has regularity, and a specific multicore fiber can be identified from the regularity, for example, in a case where the multicore fibers in the tape core wire are linearly arranged as illustrated in FIG. 2, the multicore fibers corresponding to each other may be multicore fibers arranged at the same position in each tape core wire. In addition, when an outer diameter or an outer shape of a specific multicore fiber or an outer diameter or an outer shape of the cladding 12 is different from those of other multicore fibers in the tape core wire, the multicore fibers corresponding to each other may be multicore fibers having the same outer diameter or outer shape of the multicore fiber or the outer diameter or outer shape of the cladding 12 in each of the tape core wire and the other tape core wire. Note that, as an example in which the outer diameter of the multicore fiber is different, for example, a case in which the outer diameter of the cladding 12 is the same and the thickness of the coating layer is different can be mentioned. That is, a multicore fiber that can be identified by a recognition method common to a recognition method by visual recognition of the specific multicore fiber 10a of the tape core wire Ta is the multicore fiber 10a in the other tape core wires Tb to Td corresponding to the multicore fiber 10a.

Further, in the fourth embodiment, the multicore fibers 10a in the other bundle units Bb to Bd corresponding to the specific multicore fiber 10a of the bundle unit Ba are multicore fibers in which the color of the colored layer 15 is the same as that of the specific multicore fiber 10a among the multicore fibers included in the tape core wire provided with the same identification mark as that of the tape core wire Ta including the specific multicore fiber 10a. However, the multicore fibers corresponding to each other are not limited to multicore fibers having the same identification marks of the tape core wire including the multicore fibers and the same color of the colored layer 15. For example, when printing as an identifier or marking such as a barcode is performed on the outer peripheral surfaces of the multicore fibers 10a to 10d, the multicore fibers corresponding to each other may be multicore fibers having the same identification mark of the tape core wire including the multicore fiber and the same marking. In addition, when there is regularity in the arrangement of the multicore fibers in the tape core wire and a specific multicore fiber can be identified from the regularity, the multicore fibers corresponding to each other may be multicore fibers having the same identification marks of the respective tape core wire including the multicore fiber and arranged at the same positions in the multicore fibers in the respective tape core wires. In addition, when an outer diameter or an outer shape of a specific multicore fiber or an outer diameter or an outer shape of the cladding 12 is different from those of other multicore fibers in the tape core wire, the multicore fibers corresponding to each other may be multicore fibers in which the identification marks of the respective tape core wires including the multicore fibers are the same and the outer diameter or the outer shape of the multicore fiber or the outer diameter or the outer shape of the cladding 12 are the same in the respective tape core wires. Note that, as an example in which the outer diameter of the multicore fiber is different, for example, a case in which the outer diameter of the cladding 12 is the same and the thickness of the coating layer is different can be mentioned. That is, a multicore fiber that can be identified by a recognition method common to a recognition method by visual recognition of the specific multicore fiber 10a of the bundle unit Ba is the multicore fiber 10a in the other bundle units Bb to Bd corresponding to the multicore fiber 10a.

Further, the cable C may be a so-called slot type cable including a holder that individually holds the plurality of bundle units Ba to Bd. Although not illustrated, the holder is a columnar member, and a plurality of slots, which are grooves extending along the longitudinal direction, are formed on the outer peripheral surface. The bundle units Ba to Bd are individually accommodated in the slots and held by the holder. Then, the holder is accommodated in an internal space of the sheath C1. In addition, the end surface of the holder may be printed as an identifier or marked with a barcode or the like. With such a configuration, the bundle units Ba to Bd accommodated in the slot can be distinguished and recognized on the basis of the position of the slot with respect to the identifier. When the bundle units Ba to Bd can be distinguished and recognized as described above, the colors of the bundle materials B1 of the bundle units Ba to Bd may be the same as each other, and the bundle material B1 need not be provided.

In the above embodiment, the tape core wire T, the bundle unit B, and the cable C have been described as examples of the fiber assembly, but the fiber assembly of the present invention may have a form other than the above embodiment as long as two or more multicore fibers are bundled, and may be bundled in some sections along the longitudinal method. Note that the meaning that two or more multicore fibers are bundled means that the multicore fibers are bundled along the longitudinal direction.

As described above, according to the present invention, a fiber assembly in which a specific multicore fiber can be identified when connected to an optical communication member is provided, and it is expected to be used in the field of optical fiber communication and the like.

## Claims

1. A fiber assembly in which two or more multicore fibers each including a plurality of cores and a cladding surrounding each of the cores are bundled, wherein
an optical characteristic of a specific core of the cores in a specific multicore fiber of the multicore fibers is different from an optical characteristic of the core corresponding to the specific core in another multicore fiber of the multicore fibers.

2. A fiber assembly in which a plurality of multicore fibers each including a plurality of cores and a cladding surrounding each of the cores are bundled, the fiber assembly comprising:
a plurality of fiber bundles in which two or more multicore fibers are bundled, wherein
an optical characteristic of a specific core of the cores in a specific multicore fiber of the multicore fibers of a specific fiber bundle of the fiber bundles is different from an optical characteristic of the core corresponding to the specific core in the multicore fiber corresponding to the specific multicore fiber in another fiber bundle of the fiber bundles.

3. The fiber assembly according to claim 1 or 2, wherein
a number of the specific cores is plural, and
the optical characteristic is a predetermined value obtained on a basis of a loss of light of a specific wavelength of the plurality of cores.

4. The fiber assembly according to claim 3, wherein
the specific core is all the cores of the specific multicore fiber.

5. The fiber assembly according to claim 3 or 4, wherein
the specific wavelength is a wavelength other than a communication wavelength band.

6. The fiber assembly according to claim 5, wherein
the specific wavelength is shorter than the communication wavelength band.

7. The fiber assembly according to any one of claims 3 to 6, wherein
the specific wavelength is 1360 nm or more and 1460 nm or less.

8. The fiber assembly according to any one of claims 3 to 6, wherein
the specific wavelength is 800 nm or more and 950 nm or less.

9. The fiber assembly according to claim 1, wherein
the specific multicore fiber is formed by connecting end portions of a plurality of optical fiber portions to each other, and
a loss of light at a connection portion between the optical fiber portions in the specific multicore fiber is different from a loss of light at a position corresponding to the connection portion of the specific multicore fiber in the another multicore fiber.

10. The fiber assembly according to claim 2, wherein
the specific multicore fiber is formed by connecting end portions of a plurality of optical fiber portions to each other, and
a loss of light at a connection portion between the optical fiber portions in the specific multicore fiber is different from a loss of light at a position corresponding to the connection portion of the specific multicore fiber in the multicore fiber corresponding to the specific multicore fiber.

11. The fiber assembly according to claim 1, wherein
the specific multicore fiber and the another multicore fiber are formed by connecting end portions of a plurality of optical fiber portions to each other, and
a number of connection portions between the optical fiber portions in the specific multicore fiber is different from a number of connection portions between the optical fiber portions in the another multicore fiber.

12. The fiber assembly according to claim 2, wherein
the specific multicore fiber and the multicore fiber corresponding to the specific multicore fiber are formed by connecting end portions of a plurality of optical fiber portions to each other, and
a number of connection portions between the optical fiber portions in the specific multicore fiber is different from a number of connection portions between the optical fiber portions in the multicore fiber corresponding to the specific multicore fiber.

13. The fiber assembly according to claim 1, wherein
a difference between a propagation loss of light of a specific wavelength in the specific core of the specific multicore fiber and a propagation loss of light of the specific wavelength in the core corresponding to the specific core in the another multicore fiber is 0.1 dB/km or more.

14. The fiber assembly according to claim 2, wherein
a difference between a propagation loss of light of a specific wavelength in the specific core of the specific multicore fiber and a propagation loss of light of the specific wavelength in the core corresponding to the specific core in the multicore fiber corresponding to the specific multicore fiber is 0.1 dB/km or more.

15. The fiber assembly according to any one of claims 1, 2, 13, and 14, wherein
the optical characteristic is a propagation loss of a specific wavelength of the core, and
the specific wavelength is 360 nm or more and 830 nm or less.
